# EUROPÄISCHE PATENTSCHRIFT

(11) **EP 3 715 694 B1**
(45) Veröffentlichungstag und Bekanntmachung des Hinweises auf die Patenterteilung: **04.05.2022**
(21) Anmeldenummer: 20164776.5
(22) Anmeldetag: 23.03.2020
(51) Int. Cl.: F16L 55/172, F16L 21/06, F16L 21/08

(54) **VORRICHTUNG ZUM VERBINDEN UND REPARIEREN VON ROHRABSCHNITTEN EINES ROHRS, INSBESONDERE EINES HDPE ROHRS**
DEVICE FOR CONNECTING AND REPAIRING PIPE SECTIONS OF A PIPE, IN PARTICULAR OF AN HDPE PIPE
DISPOSITIF DE RACCORDEMENT ET DE RÉPARATION DES SECTIONS DE TUYAU D'UN TUYAU, EN PARTICULIER D'UN TUYAU PEHD

(30) Priorität: 26.03.2019 CH 3922019
(43) Veröffentlichungstag der Anmeldung: 30.09.2020
(73) Patentinhaber: Aborra AG, 8103 Unterengstringen (CH)
(72) Erfinder: Civelek, Resat, 8803 Rüschlikon (CH); Döner, Seyhan, Beylikdüzü - Istanbul (TR)
(74) Vertreter: Keller Schneider Patent- und Markenanwälte AG

(56) Entgegenhaltungen:
- US-A1- 2007 296 213
- Uniones Arpol S.A.: "Catálogo Arpol - Uniones Flexibles para Tuberías", , 29. Mai 2018 (2018-05-29), XP055727452, Gefunden im Internet: URL:http://www.arpol.com/pdf/es/catalogo_a rpol_es.pdf [gefunden am 2020-09-03]

## Beschreibung

### Technisches Gebiet

Die vorliegende Erfindung beschreibt eine Vorrichtung zum Verbinden und / oder Reparieren von Rohrabschnitten eines Rohrs, insbesondere eines HDPE Rohrs.

Die erfindungsgemässe Vorrichtung betrifft insbesondere eine Vorrichtung, welche einerseits zwei Rohrabschnitte eines Rohrs verbindet oder andererseits einen beschädigten Abschnitt eines Rohrs repariert zum Erhalt eines funktionstüchtigen, zum Fördern einer Flüssigkeit geeigneten Rohrs.

### Stand der Technik

Bekannt sind Kupplungseinrichtungen in Form einer Klemmhülse wie beispielsweise in den Dokumenten US 2007/0296213 A1 und US 2012/0242083 A1 gezeigt.

Die aus der US 2012/0242083 A1 bekannte Kupplungsvorrichtung kann um eine bestehende Rohrleitung herum gelegt werden.

Bekannte Kupplungsvorrichtungen wie beispielsweise aus der US 2012/0242083 A1 bekannt haben den Nachteil, dass hohe Temperaturen und hohe Luftfeuchtigkeit problematisch sind beziehungsweise die Handhabung bei hohen Temperaturen und hoher Luftfeuchtigkeit erschwert ist.

Die aus der US 2012/0242083 A1 bekannte Kupplungsvorrichtung hat den weiteren Nachteil, dass gerade bei höheren Nenndrücken die axiale Zugfestigkeit der Kupplungsvorrichtung zu gering ist.

Im Weiteren ist aus dem Stand der Technik eine solche Kupplungsvorrichtung zum Verbinden und Reparieren von Rohrabschnitten bekannt unter dem Namen «Arpol MultiFix».

Diese bekannte Kupplungsvorrichtung «Arpol MultiFix» weist zusätzlich mehrere, mit der Klemmhülse verbindbare Begrenzungsstangen zur Erzielung einer axialen Zugfestigkeit auf.

Die Kupplungsvorrichtung «Arpol MultiFix» hat jedoch den Nachteil, dass Bauweise kompliziert und die Handhabung erschwert ist.

### Darstellung der Erfindung

Die vorliegende Erfindung hat sich zur Aufgabe gestellt, eine Kupplungsvorrichtung zum Verbinden und Reparieren von Rohrabschnitten eines Rohrs, insbesondere HDPE Rohrs, bereitzustellen, welche die Nachteile des bekannten Standes der Technik überwindet und insbesondere eine vereinfachte und kompakte Bauweise aufweist.

Diese Aufgaben erfüllt eine Vorrichtung mit den Merkmalen des Patentanspruches 1.

Erfindungsgemäss stehen eine dritte axiale Ausdehnung jeweils eines Kupplungsrings gegenüber einer zweiten axialen Ausdehnung der Klemmhülse in einem Verhältnis von bevorzugt 1 bis 5 zu 10, noch bevorzugter 2 bis 4 zu 10, am meisten bevorzugt etwa 3 zu 10.

Die hierbei erzielte, erfindungsgemässe Kupplungsvorrichtung hat aufgrund der beiden verhältnismässig klein ausgestalteten Kupplungsringe den Vorteil einer kompakten und leicht handhabbaren Bauweise, wobei die erfindungsgemässe Kupplungsvorrichtung auch bei grösseren Dimensionen leicht tragbar ist.

Dabei sind die mindestens zwei beidseitig zur Klemmhülse angeordneten Kupplungsringe jeweils in einem, mit einem u-förmigen Querschnitt versehenen Bundlager aufnehmbar, so dass im Einbauzustand auf die Rohrabschnitte wirkende Zugkräfte kompensiert werden zur Ausbildung einer axial-zugfesten Reparaturkupplung und so dass der durch die Klemmhülse erzielte Abdichtungsbereich und die durch die Kupplungsringe erzielte, axiale Zugfestigkeit räumlich getrennt wird.

Die erfindungsgemässe Kupplungsvorrichtung erlaubt vorteilhaft ein witterungsunabhängiges und sogar unter Wasser durchführbares Verbinden zweier Rohrabschnitte eines Rohrs. Zudem ist die erfindungsgemässe Kupplungsvorrichtung als zugfeste, offene Reparaturkupplung geeignet.

Im Weiteren wurde vorteilhaft gefunden, dass anhand der erfindungsgemässen Kupplungsvorrichtung eine flexible Verbindung zweier Rohrabschnitte eines Rohrs erzielt werden kann.

Die Verwendung von High Density Polyethylen (HDPE) für die Rohrabschnitte des Rohrs im Zusammenhang mit der erfindungsgemässen Kupplungsvorrichtung hat den Vorteil, dass ein auf HDPE basierendes Rohr zum Fördern von Flüssigkeiten wie Wasser, Gas, Kraftstoff oder dergleichen besonders geeignet ist.

Im Sinne der vorliegenden Erfindung kann unter Reparieren eines Rohrs die Beseitigung von Fehlern wie Rohrrisse, Brüche, Einstiche und dergleichen verstanden werden. Im Weiteren kann im Sinne der vorliegenden Erfindung unter Verbinden von Rohrabschnitten eines Rohrs unter anderem verstanden werden, dass ein schnelles Verlegen von Rohrabschnitten ohne ein Schweissen möglich ist.

Die erfindungsgemässe Kupplungsvorrichtung erlaubt vorteilhaft, dass der durch die Klemmhülse erzielte Abdichtungsbereich und die durch die Kupplungsringe erzielte, axiale Zugfestigkeit räumlich getrennt wird. Hieraus resultiert der weitere Vorteil, dass die Greifzähne freibeweglich sind und keinen negativen Einfluss auf die Abdichtung durch das Dichtelement beziehungsweise Dichtmanschette der Klemmhülse haben.

Mit anderen Worten können die beidseitig anbringbaren Kupplungsringe auch als Ankerringe aufgefasst.

Im Sinne der vorliegenden Erfindung wird unter einer axialen Zugfestigkeit verstanden, dass die axiale Beweglichkeit der verbundenen Rohrabschnitte verhindert beziehungsweise möglichst verringert wird.

Es hat sich vorteilhaft gezeigt, dass die erfindungsgemässe Kupplungsvorrichtung eine solche axiale Zugfestigkeit bei einem Flüssigkeitsdruck im Rohr bis 16bar gewährleistet.

Zudem hat sich vorteilhaft gezeigt, dass die erfindungsgemässe Kupplungsvorrichtung ohne Anbringung zusätzlicher Stützringe bereits die notwendige Dichtigkeit gewährleistet. Dennoch ist es optional denkbar, dass die erfindungsgemässe Kupplungsvorrichtung Stützringe aufweist.

Weitere vorteilhafte Ausgestaltungsformen sind in den abhängigen Patentansprüchen angegeben.

Vorzugsweise stehen bei der erfindungsgemässen Kupplungsvorrichtung eine erste axiale Ausdehnung jeweils eines Bundlagers gegenüber einer zweiten axialen Ausdehnung der Klemmhülse in einem Verhältnis von bevorzugt 1 bis 4 zu 10, noch bevorzugter 1 bis 3 zu 10, am meisten bevorzugt etwa 2 zu 10.

Im Sinne der vorliegenden Erfindung wird unter einem Bundlager ein Lagerelement verstanden, das die Ausgestaltung geeignet ist zur Aufnahme beziehungsweise Lagerung jeweils eines Kupplungsrings.

Vorzugsweise sind die Greifzähne der mindestens zwei Kupplungsringe im eingebauten Zustand der Vorrichtung zur Klemmhülse hin ausgerichtet zur Erhöhung der axialen Zugfestigkeit. Hierbei sind die Greifzähne bevorzugt aus Aluminium und / oder aus Edelstahl und / oder einem für Spritzguss und Strangguss geeigneten Kunststoff gefertigt. Im Weiteren sind vorzugsweise die Greifzähne der mindestens zwei Kupplungsringe austauschbar beziehungsweise nach Abnutzung ersetzbar, indem die Greifzähne eine Bohrung mit einem Innengewinde umfassen und anhand eines korrespondierenden Schraubenelements oder mittels Vernieten jeweils an einem Kupplungsring befestigbar sind.

Vorzugsweise beträgt bei der erfindungsgemässen Kupplungsvorrichtung für einen Innendurchmesser der Kupplungsvorrichtung von <400mm einen Winkelabstand α zwischen zwei benachbarten Greifzähnen jeweils eines Kupplungsrings von bevorzugt zwischen 10° bis 30°, noch bevorzugter zwischen 15° bis 25°, am meisten bevorzugt etwa 20° bis 25°.

Im Weiteren sind bevorzugt die Greifzähne derart angeordnet und ausgestaltet, so dass die Greifzähne bis zu maximal 10% in das Rohr eingreifen können.

Gemäss einer weiteren bevorzugten Ausgestaltung der erfindungsgemässen Kupplungsvorrichtung sind die Greifzähne in mehreren Reihen und insbesondere im Winkel versetzt in den mindestens zwei Kupplungsringen angeordnet, so dass eine besonders hohe axiale Zugfestigkeit erreicht wird, insbesondere für hohe Nenndrücke und / oder grosse Rohrdurchmesser.

Vorzugsweise ist das Dichtungselement der erfindungsgemässen Kupplungsvorrichtung aus Ethylen Propylen Dien Kautschuk (EPDM) und / oder Nitril Butadien Rubber (NBR) gefertigt.

Bevorzugt ist die Vorrichtung derart ausgestaltet, so dass der Schliessbereich der Kupplungsringe gegenüber dem Schliessbereich der Klemmhülse versetzbar, vorzugsweise um 45° bis 90°, noch bevorzugter um 60° bis 90°, ganz besonders bevorzugt um 90°, so dass eine höhere Festigkeit erzielt wird. Diese Versetzbarkeit beziehungsweise Verdrehbarkeit hat den Vorteil, dass im Falle einer Torsion des Rohrs beziehungsweise der Rohrleitung die Schliessbereiche mitdrehen können.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1a: eine perspektivische Ansicht einer bevorzugten Ausführungsform der erfindungsgemässen Kupplungsvorrichtung in eingebauten Zustand, welche eine Verbindung zwischen den Rohrabschnitten eines Rohrs herstellt;
- Fig. 1b: eine perspektivische Ansicht der bevorzugten Ausführungsform der erfindungsgemässen Kupplungsvorrichtung im zusammengebauten Zustand ohne Rohr;
- Fig. 2a: einen Querschnitt A-A durch die bevorzugte Ausführungsform der erfindungsgemässe Kupplungsvorrichtung im zusammengebauten Zustand, welche eine Verbindung zwischen den Rohrabschnitten eines Rohrs herstellt;
- Fig. 2b: einen Querschnitt B-B durch einen Kupplungsring der erfindungsgemässen Kupplungsvorrichtung im zusammengebauten Zustand ohne Rohr;
- Fig. 2c: einen Querschnitt durch einen Greifzahn der bevorzugten Ausführungsform der erfindungsgemässen Kupplungsvorrichtung.

### Beschreibung

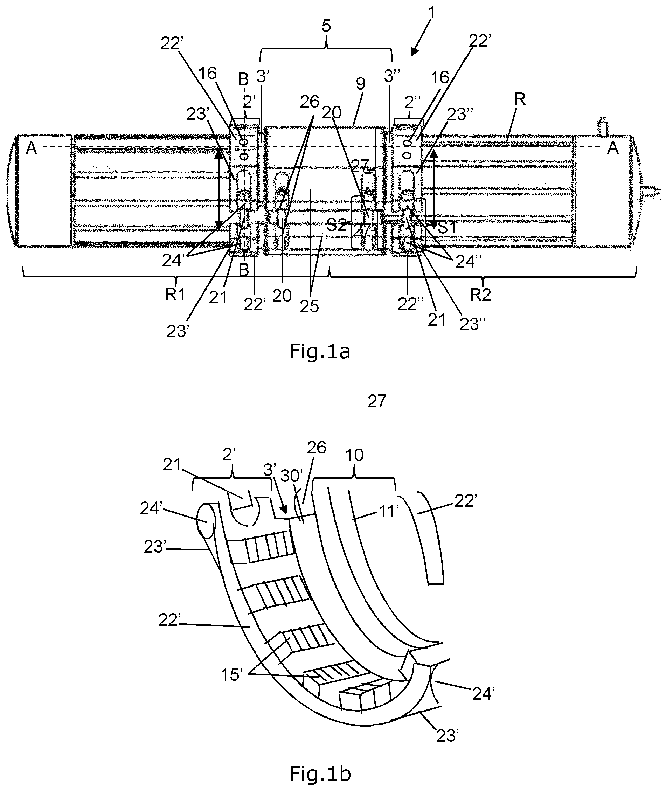

**Fig.1a** zeigt eine perspektivische Ansicht einer bevorzugten Ausführungsform der erfindungsgemässen Kupplungsvorrichtung 1 im zusammengebauten beziehungsweise eingebauten Zustand, welche eine Verbindung zwischen den Rohrabschnitten R1; R2 eines Rohrs R, insbesondere eines HDPE-Rohrs, herstellt.

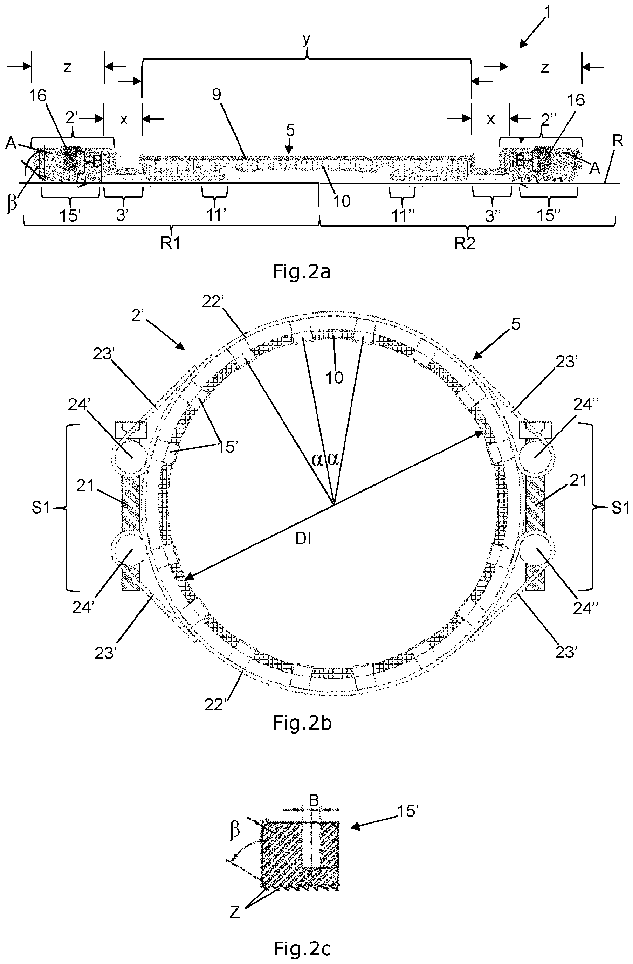

Wie in Fig.1a ersichtlich umfasst die erfindungsgemässe Kupplungsvorrichtung 1 hier eine Klemmhülse 5 mit einem hier nicht ersichtlichen, anbringbaren oder angebrachten, dem Rohr zugewandten Dichtungselement (siehe Fig.1b beziehungsweise Fig.2a) sowie mit einer das Dichtungselement 10 umgebende Rohrschelle 9 zur Herstellung einer dichtenden Verbindung zwischen den Rohrabschnitten R1; R2 eines Rohrs R. Zudem zeigt Fig.1a hier zwei, mit der Klemmhülse 5 in mechanischer Wirkverbindung stehende Kupplungsringe 2';2" zum Befestigen der Kupplungsvorrichtung 1 am Rohr R. Dabei sind die hier zwei beidseitig zur Klemmhülse 5 angeordneten Kupplungsringe 2';2" jeweils in einem, mit einem, insbesondere u-förmigen, Querschnitt versehenen Bundlager 3';3" aufnehmbar, so dass im Einbauzustand auf die Rohrabschnitte R1; R2 wirkende Zugkräfte kompensiert werden zur Ausbildung einer axial-zugfesten Reparaturkupplung, und so dass der durch die Klemmhülse 5 erzielte Abdichtungsbereich und die durch die Kupplungsringe 2';2" erzielte, axiale Zugfestigkeit räumlich getrennt wird zur Verhinderung einer negativen Beeinflussung der Dichtigkeit des hier nicht ersichtlichen Dichtungselements. Wie in Fig.1a ersichtlich weist hier die Klemmhülse 5 zwei Klemmhülsenelemente 27 auf.

Wie mittels eines Doppelpfeils angedeutet ist die Kupplungsvorrichtung 1 derart ausgestaltet, so dass der Schliessbereich S1 der beiden Kupplungsringe 2';2" gegenüber dem Schliessbereich S2 der Klemmhülse 6 versetzbar ist, vorzugsweise um 45° bis 90°, noch bevorzugter um 60° bis 90°, ganz besonders bevorzugt um 90°, so dass eine höhere Festigkeit erzielt wird.

Der Schliessbereich S1 wird hier durch zwei zweite, mit jeweils einer zweiten Aufnahmelasche 23';23" sowie einem in der zweiten Aufnahmelasche 23';23" aufnehmbaren, zweiten Bolzenelement 24';24" in Wirkverbindung stehenden, zweiten Befestigungsbolzen 21 gebildet (siehe Fig.2b). Hierbei können beispielsweise die zweiten Befestigungsbolzen 21 ein Aussengewinde und die zweiten Bolzenelemente 24';24" eine Bohrung mit einem korrespondierenden Innengewinde aufweisen, so dass durch Betätigung beziehungsweise Drehen des zweiten Befestigungsbolzen 21 eine Schliessbewegung eines Kupplungsrings 2';2" erzielbar ist.

Der Schliessbereich S2 der Klemmhülse 6 wird hier durch eine erste, mit jeweils einer ersten Aufnahmelasche 25 sowie einem in der ersten Aufnahmelasche 25 aufnehmbaren, ersten Bolzenelement 26 in Wirkverbindung stehenden, ersten Befestigungsbolzen 20 gebildet. Wie in Fig.1a ersichtlich ist hier beispielhaft jeweils in einer ersten Aufnahmelasche 25 ein erstes Bolzenelement 26 aufnehmbar und die ersten Bolzenelemente 26 mit zwei Bohrungen mit einem Innengewinde versehen, wobei hier ein Aussengewinde der ersten Befestigungsbolzens 20 mit dem Innengewinde der ersten Bolzenelemente 26 korrespondierend ausgebildet ist und dabei durch Betätigung beziehungsweise Drehen des ersten Befestigungsbolzens 20 eine Schliessbewegung der Klemmhülse 6 erzielbar ist. Auf der dem Schliessbereich S2 gegenüberliegenden Seite kann ein hier nicht gezeigtes Scharnier vorgesehen sein zur drehbaren Verbindung der Klemmhülsenelemente 27 der Klemmhülse 6.

Aufgrund der Ausgestaltung der Kupplungsvorrichtung 1 mit einem Schliessbereich S1 beziehungsweise S2 versehenen Klemmhülse 6 beziehungsweise Kupplungsringe 2';2" kann die Kupplungsvorrichtung für Reparaturzwecke um ein bestehendes Rohr herumgelegt werden.

**Fig.1b** zeigt eine perspektivische Ansicht der erfindungsgemässen Kupplungsvorrichtung 1 im zusammengebauten Zustand ohne Rohr.

Wie in Fig.1b ersichtlich umfasst hier das Bundlager 3' zwei getrennte, an die Rohrschelle 9 der Klemmhülse 5 angeformte Bundlagerelemente 30'. Dabei erstrecken sich die angeformten Bundlagerelemente 30' zumindest abschnittsweise über den Umfang der Klemmhülse 5. Eine derartige Ausgestaltung des Bundlagers 3' erlaubt die erwähnte Versetzbarkeit der Schliessbereiche S1 und S2.

**Fig.2a** zeigt einen in Fig.1a angezeigten Querschnitt A-A durch die erfindungsgemässe Kupplungsvorrichtung 1 im zusammengebauten Zustand, welche eine Verbindung zwischen den Rohrabschnitten R1; R2 eines Rohrs R herstellt.

Dabei ist hier die Klemmhülse 5 jeweils mit am Dichtungselement 10 endseitig angeordneten, doppelten Dichtlippen 11';11" zur Abdichtung zwischen Rohr R und Klemmhülse 5 versehen.

Wie in Fig.2a ersichtlich weisen die zwei Kupplungsringe 2';2" hier einen u-förmigen Querschnitt auf. Dabei wird hier im u-förmigen Querschnitt der beiden Kupplungsringe 2';2" ein Aufnahmebereich A gebildet, wobei im Aufnahmebereich A der mindestens zwei Kupplungsringe 2';2" eine Vielzahl von hier in einer Reihe angeordneten Greifzähnen 15';15" angeordnet sind. Insbesondere ist hierbei in Fig.2a ersichtlich, dass die Greifzähne 15';15" im Aufnahmebereich A der beiden Kupplungsringe 2';2" aufnehmbar beziehungsweise austauschbar sind, indem die Greifzähne 15';15" eine Bohrung B mit einem Innengewinde umfassen und hier anhand eines korrespondierenden Schraubenelements 16 jeweils an einem Kupplungsring 2';2" befestigbar sind.

Fig.2a zeigt zudem, dass die Greifzähne 15';15" der mindestens zwei Kupplungsringe 2';2" im eingebauten Zustand der Vorrichtung 1 zur Klemmhülse 5 hin ausgerichtet sind zur Erhöhung der axialen Zugfestigkeit, wobei ganz besonders bevorzugt jeweils ein Zahnelement Z der Greifzähne gegenüber einer Vertikale einen Ausrichtungswinkel β von bevorzugt 50° bis 70°, ganz besonders bevorzugt etwa 60° aufweist.

Alternativ ist es denkbar, dass gemäss einer weiteren, bevorzugten Ausführungsform die Greifzähne 15';15" in mehreren Reihen und insbesondere im Winkel versetzt in den mindestens zwei Kupplungsringen 2';2" angeordnet sind, so dass eine besonders hohe axiale Zugfestigkeit erreicht wird, insbesondere für hohe Nenndrücke und / oder grosse Rohrdurchmesser.

Wie in Fig.2a ersichtlich sind hier zwei beidseitig zur Klemmhülse 5 angeordnete Kupplungsringe 2';2" jeweils in einem, mit einem hier u-förmigen, Querschnitt versehenen Bundlager 3';3" aufgenommen, so dass im Einbauzustand auf die Rohrabschnitte R1; R2 wirkende Zugkräfte kompensiert werden zur Ausbildung einer axial-zugfesten Reparaturkupplung. Dadurch wird vorteilhaft der durch die Klemmhülse 5 erzielte Abdichtungsbereich und die durch die Kupplungsringe 2';2" erzielte, axiale Zugfestigkeit räumlich getrennt zur Verhinderung einer negativen Beeinflussung der Dichtigkeit des Dichtungselements 10.

Die in Fig.2a gezeigte, bevorzugte Ausführungsform der erfindungsgemässen Kupplungsvorrichtung 1 weist eine dritte axiale Ausdehnung z jeweils eines Kupplungsrings 2';2" gegenüber einer zweiten axialen Ausdehnung y der Klemmhülse 5, wobei die dritte axiale Ausdehnung z jeweils eines Kupplungsrings 2';2" gegenüber der zweiten axialen Ausdehnung y der Klemmhülse 5 in einem Verhältnis von bevorzugt 1 bis 5 zu 10, noch bevorzugter 2 bis 4 zu 10, am meisten bevorzugt etwa 3 zu 10 stehen. Im Weiteren weist die in Fig.2a gezeigte, bevorzugte Ausführungsform der erfindungsgemässen Kupplungsvorrichtung 1 eine zweite axiale Ausdehnung y jeweils eines Bundlagers 3';3" der Klemmhülse 5, wobei die erste axiale Ausdehnung x jeweils eines Bundlagers 3';3" gegenüber einer zweiten axialen Ausdehnung y der Klemmhülse 5 in einem Verhältnis von bevorzugt 1 bis 4 zu 10, noch bevorzugter 1 bis 3 zu 10, am meisten bevorzugt etwa 2 zu 10 stehen.

**Fig.2b** zeigt einen in Fig.1a angezeigten Querschnitt B-B durch einen Kupplungsring 2' der erfindungsgemässen Kupplungsvorrichtung 1 im zusammengebauten Zustand ohne Rohr.

Wie in Fig.2b ersichtlich wird ein Kupplungsring 2' durch zwei gegenüberliegende Kupplungsringabschnitte 22' gebildet. Wie zudem in Fig.2b gezeigt liegen zwischen den beiden Kupplungsringabschnitten 22' jeweils zwei gegenüberliegende Schliessbereiche S1.

Bevorzugt weist die Kupplungsvorrichtung 1 bei einem Innendurchmesser DI von <400mm einen Winkelabstand α zwischen zwei benachbarten Greifzähnen 15';15" jeweils eines Kupplungsrings 2';2" bevorzugt zwischen 10° bis 30°, noch bevorzugter zwischen 15° bis 25°, am meisten bevorzugt etwa 20° bis 25° auf.

**Fig.2c** zeigt einen Querschnitt durch einen Greifzahn 15' der bevorzugten Ausführungsform der erfindungsgemässen Kupplungsvorrichtung, wobei die jeweiligen Zahnelemente Z der Greifzähne 15' gegenüber einer Vertikale einen Ausrichtungswinkel β von bevorzugt 50° bis 70°, ganz besonders bevorzugt etwa 60° aufweisen.

### Bezugszeichenliste

- 1: Vorrichtung / Kupplungsvorrichtung
- 2';2": Kupplungsringe
- 3';3": Bundlager
- 5: Klemmhülse
- 9: Rohrschelle
- 10: Dichtungselement
- 11';11": Dichtungslippe
- 15';15": Greifzahn
- 16: Schraubenelement (zur Befestigung eines Greifzahns)
- 20: Erste Befestigungsbolzen (an der Klemmhülse)
- 21: Zweite Befestigungsbolzen (an den Kupplungsringen)
- 22';22": Kupplungsringabschnitte
- 23';23": Zweite Aufnahmelasche (an den Kupplungsringen)
- 24';24": Zweites Bolzenelement (zur Aufnahme in der Aufnahmelasche eines Kupplungsrings)
- 25: Erste Aufnahmelasche (an der Klemmhülse)
- 26: Erstes Bolzenelement (an der Klemmhülse)
- 27: Klemmhülsenelement
- 30';30": Bundlagerabschnitte
- A: Aufnahmebereich (der Kupplungsringe)
- B: Bohrung (in Greifzahn)
- DI: Innendurchmesser (der Vorrichtung)
- Z: Zahnelemente (eines Greifzahns)
- α: Winkelabstand (zwischen benachbarten Greifzähnen)
- β: Winkelausrichtung (der Zähne eines Greifzahns)

## Patentansprüche

1. Vorrichtung (1) zum Verbinden und Reparieren von Rohrabschnitten (R1; R2) eines Rohrs (R), insbesondere HDPE Rohrs, umfassend:
- mindestens eine Klemmhülse (5) umfassend ein anbringbares Dichtungselement (10) und eine das Dichtungselement (10) umgebende Rohrschelle (9) zur Herstellung der Verbindung zwischen den Rohrabschnitten (R1; R2) eines Rohrs (R);
wobei die mindestens eine Klemmhülse (5) jeweils mit, vorzugsweise am Dichtungselement (10) endseitig angeordneten und, vorzugsweise doppelten, Dichtlippen (11';11") zur Abdichtung zwischen Rohr (R) und Klemmhülse (5) versehen ist;
- mindestens zwei, mit der Klemmhülse (5) in mechanischer Wirkverbindung stehende Kupplungsringe (2';2") zum Befestigen der Kupplungsvorrichtung (1) am Rohr (R);
- mindestens zwei mit einem insbesondere u-förmigen Querschnitt versehenen Bundlager (3'; 3");
wobei die mindestens zwei Kupplungsringe (2';2") einen u-, m-oder v-förmigen Querschnitt aufweisen;
wobei in einem Aufnahmebereich (A) der mindestens zwei Kupplungsringe (2';2") eine Vielzahl von bevorzugt in mindestens einer Reihe angeordneten Greifzähnen (15';15") angeordnet sind; und wobei die mindestens zwei beidseitig zur Klemmhülse (5) angeordneten Kupplungsringe (2';2") jeweils in einem der Bundlager (3';3") aufnehmbar sind, so dass im Einbauzustand auf die Rohrabschnitte (R1; R2) wirkende Zugkräfte kompensiert werden zur Ausbildung einer axial-zugfesten Reparaturkupplung, und so dass der durch die Klemmhülse (5) erzielte Abdichtungsbereich und die durch die Kupplungsringe (2';2") erzielte, axiale Zugfestigkeit räumlich getrennt wird zur Verhinderung einer negativen Beeinflussung der Dichtigkeit des Dichtungselements (10);
wobei eine dritte axiale Ausdehnung (z) jeweils eines Kupplungsrings (2';2") gegenüber einer zweiten axialen Ausdehnung (y) der Klemmhülse (5) in einem Verhältnis von bevorzugt 1 bis 5 zu 10, noch bevorzugter 2 bis 4 zu 10, am meisten bevorzugt etwa 3 zu 10 stehen.

2. Vorrichtung (1) nach Patentanspruch 1,
**dadurch gekennzeichnet, dass**
eine erste axiale Ausdehnung (x) jeweils eines Bundlagers (3';3") gegenüber einer zweiten axialen Ausdehnung (y) der Klemmhülse (5) in einem Verhältnis von bevorzugt 1 bis 4 zu 10, noch bevorzugter 1 bis 3 zu 10, am meisten bevorzugt etwa 2 zu 10 stehen.

3. Vorrichtung (1) nach Patentanspruch 1 oder 2,
**dadurch gekennzeichnet, dass**
die Greifzähne (15';15") der mindestens zwei Kupplungsringe (2';2") im eingebauten Zustand der Vorrichtung (1) zur Klemmhülse (5) hin ausgerichtet sind zur Erhöhung der axialen Zugfestigkeit.

4. Vorrichtung (1) nach einem der vorherigen Patentansprüche,
**dadurch gekennzeichnet, dass**
die Greifzähne (15';15") aus Aluminium und / oder aus Edelstahl und / oder einem für Spritzguss und Strangguss geeigneten Kunststoff gefertigt sind.

5. Vorrichtung (1) nach einem der vorherigen Patentansprüche,
**dadurch gekennzeichnet, dass**
die Greifzähne (15';15") der mindestens zwei Kupplungsringe (2';2") austauschbar sind, indem die Greifzähne (15';15") eine Bohrung (B) mit einem Innengewinde umfassen und anhand eines korrespondierenden Schraubenelements (16) oder mittels Vernieten jeweils an einem Kupplungsring (2';2") befestigbar sind.

6. Vorrichtung (1) nach einem der vorherigen Patentansprüche,
**dadurch gekennzeichnet, dass**
insbesondere für einen Innendurchmesser (DI) der Vorrichtung von <400mm, ein Winkelabstand (α) zwischen zwei benachbarten Greifzähnen (15';15") jeweils eines Kupplungsrings (2';2") bevorzugt zwischen 10° bis 30°, noch bevorzugter zwischen 15° bis 25°, am meisten bevorzugt etwa 20° bis 25° beträgt.

7. Vorrichtung (1) nach einem der vorherigen Patentansprüche,
**dadurch gekennzeichnet, dass**
die Greifzähne (15';15") derart angeordnet und ausgestaltet sind, so dass die Greifzähne (15';15") bis zu maximal 10% in das Rohr (R) eingreifen können.

8. Vorrichtung (1) nach einem der vorherigen Patentansprüche,
**dadurch gekennzeichnet, dass**
die Greifzähne (15';15") in mehreren Reihen und insbesondere im Winkel versetzt in den mindestens zwei Kupplungsringen (2';2") angeordnet sind, so dass eine besonders hohe axiale Zugfestigkeit erreicht wird, insbesondere für hohe Nenndrücke und / oder grosse Rohrdurchmesser.

9. Vorrichtung (1) nach einem der vorherigen Patentansprüche,
**dadurch gekennzeichnet, dass**
das Dichtungselement (10) aus Ethylen Propylen Dien Kautschuk (EPDM) und / oder Nitril Butadien Rubber (NBR) gefertigt ist.

10. Vorrichtung (1) nach einem der vorherigen Patentansprüche,
**dadurch gekennzeichnet, dass**
die Vorrichtung derart ausgestaltet ist, so dass der Schliessbereich (S1) der Kupplungsringe (2';2") gegenüber Schliessbereich (S2) der Klemmhülse (6) versetzbar ist, vorzugsweise um 45° bis 90°, noch bevorzugter um 60° bis 90°, ganz besonders bevorzugt um 90°, so dass eine höhere Festigkeit erzielt wird.

## Claims

1. Device (1) for connecting and repairing pipe sections (R1; R2) of a pipe (R), more particularly an HDPE pipe, comprising:
- at least one clamping sleeve (5) comprising an attachable sealing element (10) and a pipe clamp (9) surrounding the sealing element (10) for producing a connection between the pipe sections (R1; R2) of a pipe (R);
wherein, arranged preferably at the end on the sealing element (10), the at least one clamping sleeve (5) is provided with, preferable double, sealing lips (11'; 11") for sealing between the pipe (R) and the clamping sleeve (5);
- at least two coupling rings (2'; 2") in mechanical effective connection with the clamping sleeve (5) for fastening the coupling device (1) on the pipe (R);
- at least two collar bearings (3'; 3") with, in particular, a U-shaped cross-section;
wherein the at least two coupling rings (2'; 2") have a U-shaped, M-shaped or V-shaped cross-section;
wherein arranged in a receiving area (A) of the at least two coupling rings (2'; 2") is a plurality of gripping teeth (15'; 15"), preferably arranged in at least one row; and wherein the at least two coupling rings (2', 2") arranged on both sides in relation to the clamping sleeve (5) can each be received in one of the collar bearings (3', 3") so that tensile forces acting in the assembled state on the pipe sections (R1; R2) are compensated to form an axially high tensile strength repair coupling, and so that the sealing area achieved through the clamping sleeve (5) and the axial tensile strength achieved through the coupling rings (2'; 2") is spatially separated to prevent negative influencing of the impermeability of the sealing element (10);
wherein a third axial extension (z) of a respective coupling ring (2', 2") is at a ratio of preferably 1 to 5 to 10, more preferably 2 to 4 to 10, most preferably around 3 to 10 in relation to a second axial extension (y) of the clamping sleeve (5).

2. Device (1) according to claim 1,
**characterised in that**
a first axial extension (x) of a respective collar bearing (3'; 3") is at a ratio of preferably 1 to 4 to 10, more preferably 1 to 3 to 10, most preferably around 2 to 10 in relation to a second axial extension (y) of the clamping sleeve (5).

3. Device (1) according to claims 1 or 2,
**characterised in that**
in the assembled state of the device (1), the gripping teeth (15'; 15") of the at least two coupling rings (2'; 2") are orientated towards the clamping sleeve (5) to increase the axial tensile strength.

4. Device (1) according to any one of the preceding claims,
**characterised in that**
the gripping teeth (15'; 15") are made of aluminium and/or stainless steel and/or a plastic material suitable for injection moulding and continuous casting.

5. Device (1) according to any one of the preceding claims,
**characterised in that**
the gripping teeth (15'; 15") of the at least two coupling rings (2'; 2") are interchangeable **in that** the gripping teeth (15', 15") comprise a boring (B) with an internal thread and by means of a corresponding screw-type element (16) or by means of riveting can each be fastened to a coupling ring (2'; 2").

6. Device (1) according to any one of the preceding claims,
**characterised in that**
particularly for an inner diameter (DI) of the device of < 400 mm, an angular distance (α) between adjacent gripping teeth (15'; 15") of a respective coupling ring (2'; 2") is preferably between 10° to 30°, more preferably between 15° to 25°, most preferably between 20° to 25°.

7. Device (1) according to any one of the preceding claims,
**characterised in that**
the gripping teeth (15'; 15") are arranged and designed in such a way that the gripping teeth (15'; 15") can engage up to a maximum of 10% into the pipe (R).

8. Device (1) according to any one of the preceding claims,
**characterised in that**
the gripping teeth (15'; 15") are arranged in several rows and, in particular, are offset at an angle in the at least two coupling rings (2'; 2"), so that a particularly high tensile strength is attained, in particular for high nominal pressures and/or large pipe diameters.

9. Device (1) according to any one of the preceding claims,
**characterised in that**
the sealing element (10) is made of ethylene propylene diene rubber (EDPM) and/or nitrile butadiene rubber (NBR).

10. Device (1) according to any one of the preceding claims,
**characterised in that**
the device is configured in such a way that the closing area (S1) of the coupling rings (2'; 2") is displaceable vis-α-vis the closing area (S2) of the clamping sleeve (6), preferably by 45° to 90°, more preferably by 60° to 90, very particularly preferably by 90° so that a higher tensile strength is attained.

## Revendications

1. Dispositif (1) pour relier et réparer des tronçons de tuyaux (R1 ; R2) d'un tuyau (R), en particulier d'un tuyau HDPE, comprenant :
- au moins une douille de serrage (5) comprenant un élément d'étanchéité (10) pouvant être posé et un collier pour tuyau (9) entourant l'élément d'étanchéité (10) pour créer la liaison entre les tronçons de tuyaux (R1 ; R2) d'un tuyau (R) ;
dans lequel l'au moins une douille de serrage (5) est dotée respectivement de lèvres d'étanchéité (11' ; 11") de préférence doublées, de préférence disposées à l'extrémité de l'élément d'étanchéité (10) pour créer l'étanchéité entre le tuyau (R) et la douille de serrage (5) ;
- au moins deux anneaux d'accouplement (2', 2") en liaison active mécanique avec la douille de serrage (5) pour fixer le dispositif d'accouplement (1) sur le tuyau (R) ;
- au moins deux paliers à collerette (3', 3") dotés d'une section particulièrement en U ;
dans lequel les au moins deux anneaux d'accouplement (2', 2") présentent une section en U, en M ou en V ;
dans lequel une pluralité de dents de préhension (15' ; 15") disposées de préférence dans au moins une rangée sont disposées dans une zone de réception (A) des au moins deux anneaux d'accouplement (2', 2") ; et dans lequel les au moins deux anneaux d'accouplement (2', 2") disposés de chaque côté par rapport à la douille de serrage (5) peuvent être reçus chacun dans un des paliers à collerette (3' ; 3"), de sorte que dans l'état de montage, des forces de traction agissant sur les tronçons de tuyaux (R1 ; R2) puissent être compensées pour former un accouplement de réparation résistant axialement à la traction, et que la zone d'étanchéité obtenue par la douille de serrage (5) et la résistance à la traction axiale obtenue par les anneaux d'accouplement (2', 2") soient séparées physiquement pour empêcher une influence négative de l'étanchéité de l'élément d'étanchéité (10) ;
dans lequel une troisième dilatation axiale (z) d'un anneau d'accouplement (2' ; 2") respectif par rapport à une deuxième dilatation axiale (y) de la douille de serrage (5) est dans un rapport de préférence de 1 jusqu'à 5 à 10, plus encore de préférence de 2 jusqu'à 4 à 10, de manière la plus préférée d'environ 3 à 10.

2. Dispositif (1) selon la revendication 1,
**caractérisé en ce qu'**
une première dilatation axiale (x) d'un palier à collerette (3' ; 3") respectif par rapport à une deuxième dilatation axiale (y) de la douille de serrage (5) est dans un rapport de préférence de 1 jusqu'à 4 à 10, plus encore de préférence de 1 jusqu'à 3 à 10, de manière la plus préférée d'environ 2 à 10.

3. Dispositif (1) selon la revendication 1 ou 2,
**caractérisé en ce que**
les dents de préhension (15' ; 15") des au moins deux anneaux d'accouplement (2', 2") sont alignées en direction de la douille de serrage (5) lorsque le dispositif (1) est monté, pour augmenter la résistance à la traction axiale.

4. Dispositif (1) selon l'une des revendications précédentes,
**caractérisé en ce que**
les dents de préhension (15' ; 15") sont fabriquées en aluminium et/ou en acier inox et/ou dans un plastique approprié pour le moulage par injection et la coulée continue.

5. Dispositif (1) selon l'une des revendications précédentes,
**caractérisé en ce que**
les dents de préhension (15' ; 15") des au moins deux anneaux d'accouplement (2', 2") sont interchangeables, **en ce que** les dents de préhension (15' ; 15") comprennent un perçage (B) avec un filetage femelle, et peuvent être fixées respectivement sur un anneau d'accouplement (2', 2") à l'aide d'un élément à visser (16) correspondant ou par rivetage.

6. Dispositif (1) selon l'une des revendications précédentes,
**caractérisé en ce qu'**
en particulier pour un diamètre intérieur (DI) du dispositif < 400 mm, un écart angulaire (α) entre deux dents de préhension (15' ; 15") voisines d'un anneau d'accouplement (2', 2") respectif fait de préférence entre 10° et 30°, plus encore de préférence entre 15° et 25°, de manière la plus préférée environ 20° à 25°.

7. Dispositif (1) selon l'une des revendications précédentes,
**caractérisé en ce que**
les dents de préhension (15' ; 15") sont ainsi disposées et conçues que les dents de préhension (15' ; 15") peuvent s'engrener jusqu'à maximum 10 % dans le tuyau (R).

8. Dispositif (1) selon l'une des revendications précédentes,
**caractérisé en ce que**
les dents de préhension (15' ; 15") sont disposées dans plusieurs rangées et en particulier décalées en angle dans les au moins deux anneaux d'accouplement (2', 2"), de sorte qu'une résistance à la traction axiale élevée est atteinte, en particulier pour des pressions nominales élevées et/ou de grands diamètres.

9. Dispositif (1) selon l'une des revendications précédentes,
**caractérisé en ce que**
l'élément d'étanchéité (10) est fabriqué en caoutchouc éthylène-propylène-diène (EPDM) et/ou en caoutchouc nitrile butadiène (NBR).

10. Dispositif (1) selon l'une des revendications précédentes,
**caractérisé en ce que**
le dispositif est ainsi conçu que la zone de fermeture (S1) des anneaux d'accouplement (2', 2") peut être décalée par rapport à la zone de fermeture (S2) de la douille de serrage (6), de préférence de 45° à 90°, plus encore de préférence de 60° à 90°, de manière totalement préférée de 90°, de sorte qu'une résistance plus élevée est atteinte.
